Europäisches Patentamt

European Patent Office

Office européen des brevets

(11) Publication number: **0 095 272**
**B1**

## (12) EUROPEAN PATENT SPECIFICATION

(45) Date of publication of patent specification: **06.08.86**

(51) Int. Cl.⁴: **G 06 F 7/58**

(21) Application number: **83302593.5**

(22) Date of filing: **09.05.83**

(54) **Random sequence generators.**

(30) Priority: **21.05.82 GB 8214945**

(43) Date of publication of application:
**30.11.83 Bulletin 83/48**

(45) Publication of the grant of the patent:
**06.08.86 Bulletin 86/32**

(84) Designated Contracting States:
**AT BE CH DE FR IT LI LU NL SE**

(56) References cited:
**DE-A-2 829 293**
**FR-A-2 239 817**
**US-A-3 681 708**
**US-A-4 161 041**

**ELECTRONICS LETTERS, vol. 3, no. 2, February
1967, pages 88-90, Hitchin, GB., M. DARNELL:
"Generation of quadratic-residue sequences"**

(73) Proprietor: **THE MARCONI COMPANY LIMITED
The Grove Warren Lane
Stanmore Middlesex HA7 4LY (GB)**

(72) Inventor: **Jenner, Peter Michael
19 Craneswater Avenue
Southsea Hampshire (GB)**

(74) Representative: **Dolwin, John Davison
Central Patent Department Wembley Office
The General Electric Company, p.l.c.
Hirst Research Centre East Lane
Wembley Middlesex HA9 7PP (GB)**

Courier Press, Leamington Spa, England.

## Description

The present invention relates to random sequence generators and more particularly to such generators the output electrical signals of which represent in digital form an apparently random sequence of multi digit numbers.

Pseudo random sequence generators, which now are well known, use clock signals from high frequency oscillators, which may be self contained in the generator, to step through a long series of output changes representing a pseudo-random sequence of multi-digit numbers. After a period of time the sequence will recommence.

In order to extend the range of the pseudo-random sequence it is also known to disturb the logic state of the generator by periodically altering the feedback of the generator using a second oscillator having a lower frequency.

· The random time jitter between the two oscillator periods results in a further small variation in the number sequence produced.

German Patent Specification DE—A—2,829,293 discloses an arrangement in which control means receives an input from a first pseudo-random sequence generator and modifies it in dependence upon a signal generated by a second pseudo-random sequence generator. This modification may simply be to the timing of the characters of the sequence, or, the output from the first pseudo-random sequence generator may be stored in a buffer store and read out by the control means which determines the store addresses and/or the time for reading out of stored sequences of characters depending on a time variable control parameter from the second pseudo-random sequence generator.

It is an object of the present invention to increase the variation in the number sequence produced such that the output of the random sequence generator approaches a true random digital noise source.

According to one aspect of the present invention in a method of controlling a pseudo-random generator of the kind which steps through a pseudo-random sequence in response to periodic clock signals received from a first oscillator and which is responsive to clock signals received from a second oscillator to cause a change in the pseudo-random sequence, the periodicity of the clock signals supplied by the second oscillator is varied in dependence upon a decaying integration of the value of an output of the pseudo-random sequence generator.

According to a second aspect of the present invention in a random sequence generator, a pseudo-random sequence generator which is responsive to periodic clock signals from a first oscillator to step through a pseudo-random sequence and which is responsive to clock signals received from a second oscillator to cause a change in the pseudo-random sequence, and the periodicity of the clock signals supplied by the second oscillator is controlled in dependance upon a decaying integration of the value of an output of the pseudo-random sequence generator.

Preferably said second oscillator is a voltage controlled oscillator and an output of the pseudo-random number generator is integrated by an integrator to provide the voltage to control the frequency output thereof.

A further input may be provided to the pseudo-random sequence generator to cause in combination with the clock signals from the second oscillator further variations in the changes of the pseudo-random sequence.

The output of the random sequence generator may be fed to a latch which may be arranged to receive clock pulses at periodic intervals to store the output of the pseudo-random sequence generator from time to time. The output of the latch may be in binary form or may be arranged to respond to a further signal to provide a tristate output.

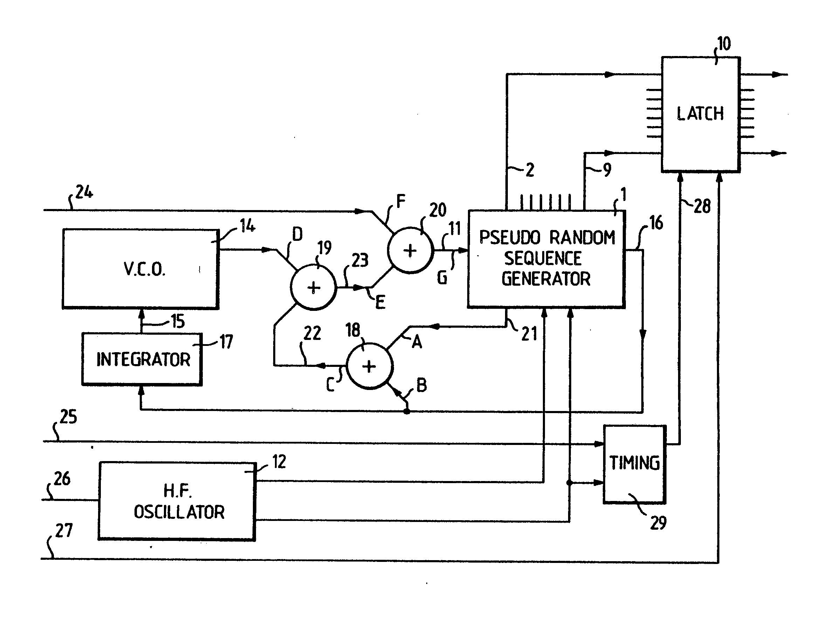

A random sequence generator in accordance with the invention will now be described by way of example only with reference to the accompanying drawing which is a block diagram of the generator.

Referring to the drawing the generator comprises a pseudo-random sequence generator 1 providing an eight bit output on leads 2 to 9 which are connected to a latch 10. In the absence of a change in a control signal on an input 11, the pseudo-random sequence generator 1 steps through every possible combination of the eight outputs 2—9 in a predetermined (pseudo-random) order under control of clock signals supplied by a frequency oscillator 12.

It will be appreciated that in one condition of the input 11 (say logic '0') the pseudo-random sequence generator 1 steps through the predetermined order of the outputs 2—9 whilst in the other condition (logic 1) of the input 11 the inverse of the sequence is provided.

Accordingly it is known to use a second oscillator connected to the input 11 to cause switching between the primary random sequence and the inverse of the sequence. The second oscillator has a lower frequency than the oscillator 12 and the presence of a random time jitter between the two oscillators introduces a small further random element into the sequence due to a variation of plus or minus one in the number of high frequency oscillator periods in one period of the low frequency oscillator.

In the present circuit the low frequency oscillator is replaced by a voltage controlled oscillator 14 the output frequency of which varies in response to the voltage at an input 15. The voltage applied at the input 15 is derived from one output 16 of the pseudo-random sequence generator 1 which output may be one of the outputs 2—9 or a separately controlled output of the generator 1. The output 16 is connected to an integrator circuit 17 which has a fixed time constant. Thus the value of the voltage provided by the integrator 17 commences at zero and increases each time a '1' is present at the output 16,

with the voltage value decreasing at a constant rate when an '0' is present at the output 16. Thus the frequency of the oscillator varies continuously in dependence upon the signal at the output 16 and the time constant of the integrator 17 and, if the oscillator is directly connected to the intput 11 of the pseudo-random sequence generator 1 the output sequence will switch to the inverse sequence at periodic intervals.

Each time one condition (say logic '1') is present at the output 16 the voltage output of the integrator 17 will increase and the frequency of the oscillator 14 will increase accordingly at varying rates since the output 16 is also responding to the changes caused by the feedback to the pseudo-random sequence generator 1. Thus a continuously varying interchange between the two sequences of the pseudo-random sequence generator 1 occurs due to the variation in the disturbance pattern applied to the input 11.

To cause a further variation in the disturbance pattern a number of EXCLUSIVE OR (EXOR) logic gates 18 to 20 are provided. The EXOR gate 18 has one of its two inputs connected to the output 16 and the other of its inputs connected to a further output 21 (which may be one of the outputs 2—9) of the pseudo-random number generator 1.

The output 22 of the EXOR gate 18 is connected to one of the two inputs of the EXOR gate 19 the other of which is connected to the output of the voltage controlled oscillator 14. The output 23 of the EXOR gate 19 is connected to one input of the EXOR gate 20 the other input of which is connected as an external input 24 to the random number generator.

A further disturbance pattern influence, such as another random number generator, may be connected to the input 24. Thus it will be appreciated that the random pattern at the outputs 2 to 9 of the pseudo-random sequence generator 1 is approaching a true random digital noise source.

The latch 10 may be a three-state D-type latch which when enabled by way of an input 27 provides a tri-state output from the binary input suitable for connection to equipment requiring such an input. When no signal is present on the input lead 27 the random output present on the leads 2—9 at the time a clock signal is present on the input 28 is stored and presented at the output.

To enable the output to be latched timing signals may be presented at an input 25 of the random sequence generator. On receipt of a timing signal on the lead 25 a timing circuit 29 awaits the next clock signal from the oscillator 12 before forwarding a signal to the input 28 of the latch.

The latch may alternatively be controlled to provide a serial output signal from the parallel input signal provided by the pseudo-random number generator 1.

The random number generator may be suitably implemented in a thick film hybrid integrated circuit.

It will be realised that whilst as herein described the voltage at the input 15 of the voltage controlled oscillator 14 is derived from an output of the pseudo-random sequence generator 1, the voltage may be derived from any suitable source. For example the integrator 17 may be supplied by signals from a further pseudo-random sequence generator (not shown).

The invention finds particular use in the field of cryptography but may be of use in any field in which high quality random number generation is required. Examples of such fields include gambling and lotteries.

**Claims**

1. A method of controlling a pseudo-random sequence generator of the kind which steps through a pseudo-random sequence in response to periodic clock signals received from a first oscillator to cause a change in the pseudo-random sequence characterised in that the periodicity of the clock signals supplied by the second city of the clock signals supplied by the second oscillator is varied in dependance upon a decaying integration of the value of another pseudo-random sequence.

2. A method according to Claim 1 further characterised in that the other pseudo-random sequence is derived from an output of the controlled pseudo-random sequence generator.

3. A random sequence generator of the kind having a pseudo-random sequence generator (1) which is responsive to periodic clock signals from a first oscillator (12) to step through a pseudo-random sequence and which is responsive to clock signals from a second oscillator (14) to cause a change in the pseudo-random sequence characterised in that the periodicity of the clock signals supplied by the second oscillator (14) is controlled in dependance upon a decaying integration of the value of another pseudo-random sequence.

4. A random sequence generator according to Claim 3 further characterised in that said other pseudo-random sequence is derived from an output (16) of the random sequence generator.

5. A random sequence generator according to Claim 3 or Claim 4 further characterised in that said second oscillator (14) is a voltage controlled oscillator and said other pseudo-random sequence is integrated by an integrator (17) to provide the voltage to control the output frequuence thereof.

6. A random sequence generator according to Claim 3, Claim 4 or Claim 5 further characterised in that means (20) are provided to combine the clock signals from the second oscillator (14) with signals from an external source to cause further variations in the pseudo-random sequence.

7. A random sequence generator according to Claim 6 further characterised in that the external source is another pseudo-random or random sequence generator.

8. A random sequence generator according to any one of Claims 3 to 7 further characterised in that means (18, 19) are provided to combine the clock signals from the second oscillator (14) with signals derived from an output or outputs (16, 21) of the random sequence generator (1) to cause further variations in the pseudo-random sequence.

9. A random sequence generator according to any one of Claims 3 to 8 further characterised in that the output of the pseudo-random sequence generator (1) is fed to a latch (10) which is responsive to clock pulses at an input (28) to store the output of the pseudo-random sequence generator from time to time.

10. A random sequence generator according to Claim 9 further characterised in that the output of the latch (10) represents a binary word.

11. A random sequence generator according to Claim 9 further characterised in that the latch is responsive to a further signal at an input (27) thereof to provide a tri-state output.

12. A random sequence generator according to Claim 9, Claim 10 or Claim 11 further characterised in that the latch is arranged to provide the output pseudo-random sequence in serial form.

**Patentansprüche**

1. Verfahren zum Steuern eines Pseudozufallsfolgegenerators, der in Abhängigkeit von periodischen Taktsignalen, die er von einem ersten Oszillator erhält, schrittweise eine Pseudozufallsfolge durchläuft und in Abhängigkeit von einem zweiten Oszillator eine Änderung der Pseudozufallsfolge bewirkt, dadurch gekennzeichnet, daß die Periodizität der durch den zweiten Oszillator geleiferten Taktsignale in Abhängigkeit von einer abklingenden Integration des Wertes einer anderen Pseudozufallsfolge geändert wird.

2. Verfahren nach Anspruch 1, ferner dadurch gekennzeichnet, daß die andere Pseudozufallsfolge von einem Ausgangssignal des gesteuerten Pseudozufallsfolgegenerators abgeleitet wird.

3. Zufallsfolgegenerator mit einem Pseudozufallsfolgegenerator (1), der in Abhängigkeit von periodischen Taktsignalen eines ersten Oszillators (12) schrittweise eine Pseudozufallsfolge durchläuft und in Abhängigkeit von Taktsignalen eines zweiten Oszillators (14) eine Änderung der Pseudozufallsfolge bewirkt, dadurch gekennzeichnet, daß die Periodizität der durch den zweiten Oszillator (14) erzeugten Taktsignale in Abhängigkeit von einer abklingenden Integration des Wertes einer anderen Pseudozufallsfolge gesteuert wird.

4. Zufallsfolgegenerator nach Anspruch 3, ferner dadurch gekennzeichnet, daß die erwähnte andere Pseudozufallsfolge aus einem Ausgangssignal (16) des Zufallsfolgegenerators abgeleitet wird.

5. Zufallsfolgegenerator nach Anspruch 3 oder Anspruch 4, ferner dadurch gekennzeichnet, daß der erwähnte zweite Oszillator (14) ein spannungsgesteuerter Oszillator ist und die erwähnte andere Pseudozufallsfolge durch einen Integrator (17) integriert wird, um die Spannung zur Steuerung seiner Ausgangsfrequenz zu bilden.

6. Zufallsfolgegenerator nach Anspruch 3, Anspruch 4 oder Anspruch 5, dadurch gekennzeichnet, daß Mittel (20) zum Kombinieren der Taktsignale des zweiten Oszillators (14) mit Signalen aus einer äußeren Quelle, um weitere Änderungen der Pseudozufallsfolge zu bewirken, vorgesehen sind.

7. Zufallsfolgegenerator nach Anspruch 6, ferner dadurch gekennzeichnet, daß die äußere Quelle ein anderer Pseudozufalls- oder Zufallsfolgegenerator ist.

8. Zufallsfolgegenerator nach einem der Ansprüche 3 bis 7, ferner dadurch gekennzeichnet, daß Mittel (18, 19) zum Kombinieren der Taktsignale des zweiten Oszillators (14) mit Signalen, die aus einem Ausgangssignal oder Ausgangssignalen (16, 21) des Zufallsfolgegenerators (1) abgeleitet worden sind, um weitere Änderungen der Pseudozufallsfolge zu bewirken, vorgesehen sind.

9. Zufallsfolgegenerator nach einem der Ansprüche 3 bis 8, ferner dadurch gekennzeichnet, daß das Ausgangssignal des Pseudozufallsfolgegenerators (1) einem Kippspeicher (10) zugeführt wird, der in Abhängigkeit von Taktsignalen an einem Eingang (28) das Ausgangssignal des Pseudozufallsfolgegenerators von Zeit zu Zeit speichert.

10. Zufallsfolgegenerator nach Anspruch 9, ferner dadurch gekennzeichnet, daß das Ausgangssignal des Kippspeichers (10) ein binäres Wort darstellt.

11. Zufallsfolgegenerator nach Anspruch 9, ferner dadurch gekennzeichnet, daß der Kippspeicher in Abhängigkeit von einem weiteren Signal an einem ihm gehörenden Eingang (27) ein Dreizustandsausgangssignal erzeugt.

12. Zufallsfolgegenerator nach Anspruch 9, Anspruch 10 oder Anspruch 11, ferner dadurch gekennzeichnet, daß der Kippspeicher so ausgebildet ist, daß er die Ausgangspseudozufallsfolge in serieller Form bildet.

**Revendications**

1. Procédé de commande d'un générateur de séquences pseudo-aléatoires du type qui progresse dans une séquence pseudo-aléatoire sous la commande de signaux périodiques d'horloge reçus d'un premier oscillateur et qui est commandé par un second oscillateur afin qu'un changement de la séquence pseudo-aléatoire soit provoqué, caractérisé en ce que la périodicité de signaux d'horloge transmis par le second oscillateur est modifiée d'après une intégration décroissante de la valeur d'une autre séquence pseudo-aléatoire.

2. Procédé selon la revendication 1, caractérisé en outre en ce que l'autre séquence pseudo-aléatoire est tirée d'un signal de sortie du générateur commandé de séquences pseudo-aléatoire.

3. Générateur de séquences alétoires du type comprenant un générateur (1) de séquences pseudo-aléatoires qui est commandé par des signaux périodiques d'horloge provenant d'un premier oscillateur (12) afin qu'il progresse dans une séquence pseudo-aléatoire, et qui est commandé par des signaux d'horloge provenant d'un second

4

oscillateur (14) de manière qu'un changement de la séquence pseudo-aléatoire soit provoqué, caractérisé en ce que la périodicité des signaux d'horloge transmis par le second oscillateur (14) est commandé d'après une intégration décroissante de la valeur d'une autre séquence pseudo-aléatoire.

4. Générateur de séquences aléatoires selon la revendication 3, caractérisé en outre en ce que l'autre séquence pseudo-aléatoire est tirée d'un signal de sortie (16) du générateur de séquences aléatoires.

5. Générateur de séquences aléatoires selon l'une des revendications 3 et 4, caractérisé en outre en ce que le second oscillateur (14) est un oscillateur commandé en tension et l'autre séquence pseudo-aléatoire est intégrée par un intégrateur (17) destiné à former la tension de commande de la fréquence de sortie de l'oscillateur.

6. Générateur de séquences aléatoires selon l'une quelconque des revendications 3 à 5, caractérisé en outre en ce qu'un dispositif (20) est destiné à combiner les signaux d'horloge du second oscillateur (14) à des signaux d'une source externe de manière que des variations supplémentaires soient provoquées dans la séquence pseudo-aléatoire.

7. Générateur de séquences aléatoires selon la revendication 6, caractérisé en outre en ce que la source externe est un autre générateur de séquences aléatoires ou pseudo-aléatoires.

8. Générateur de séquences aléatoires selon l'une quelconque des revendications 3 à 7, caractérisé en outre en ce qu'un dispositif (18, 19) est disposé afin qu'il combine les signaux d'horloge du second oscillateur (14) à des signaux tirés d'un ou plusieurs signaux de sortie (16, 21) du générateur (1) de séquences aléatoires afin que la séquence pseudo-aléatoire subisse des variations supplémentaires.

9. Générateur de séquences aléatoires selon l'une quelconque des revendications 3 à 8, caractérisé en outre en ce que le signal de sortie du générateur (1) de séquences pseudo-aléatoires est transmis à un basculeur (10) qui est commandé par des impulsions d'horloge à une entrée (28) afin qu'il mémorise le signal de sortie du générateur de séquences pseudo-aléatoires de temps en temps.

10. Générateur de séquences aléatoires selon la revendication 9, caractérisé en outre en ce que le signal de sortie du basculeur (10) représente un mot binaire.

11. Générateur de séquences aléatoires selon la revendication 9, caractérisé en outre en ce que le basculeur est commandé par un signal supplémentaire parvenant à une de ses entrées (27) afin qu'il forme un signal de sortie à trois états.

12. Générateur de séquences aléatoires selon l'une quelconque des revendications 9 à 11, caractérisé en outre en ce que le basculeur est réalisé de manière qu'il transmette la séquence pseudo-aléatoire de sortie sous forme série.